# EUROPEAN PATENT SPECIFICATION

(11) **EP 4 323 644 B1**
(45) Date of publication and mention of the grant of the patent: **01.07.2026**
(21) Application number: 22718858.8
(22) Date of filing: 07.04.2022
(51) Int. Cl.: F03D 13/25

(54) **OFFSHORE WIND TURBINE SYSTEM AND OFFSHORE PLATFORM**
OFFSHORE-WINDTURBINENSYSTEM UND OFFSHORE-PLATTFORM
SYSTÈME D'ÉOLIENNE EN MER ET PLATEFORME EN MER

(30) Priority: 12.04.2021 DK PA202170170
(43) Date of publication of application: 21.02.2024
(73) Proprietor: Stiesdal Offshore A/S, 7323 Give (DK)
(72) Inventor: STIESDAL, Henrik, 5000 Odense (DK)
(74) Representative: Patrade A/S
(86) International application number: PCT/DK2022/050074
(87) International publication number: WO 2022/218489

(56) References cited:
- WO-A1-2017/001246
- US-A1- 2015 329 180
- US-A1- 2016 362 861

## Description

### Field of the Invention

The present invention relates to a floating offshore platform and its combination with a wind turbine. In particular, it relates to a wind turbine and offshore structure as disclosed in the preamble of the claims.

### Background of the invention

For floating platforms for offshore wind turbines, triangular shapes are often preferred due to their high degree of stiffness relatively to size and, thus, also with respect of the relatively small amount of necessary material, which still is substantial for large wind turbines. Examples are given in International patent application WO2017/157399. In order to give the platform stability in stormy conditions, submerged weights have been proposed. However, this principle is rather costly.

US 2016/0362861 A1 discloses an offshore wind turbine system comprising a wind turbine having a tower, and a floating platform comprising a tower support. The platform comprises an equilateral triangular frame wherein the tower support is arranged in the center thereof. At each of the three edges of the triangle, there is provided a buoyancy module. Three radial braces connect the tower support with each of the three buoyancy modules. The radial braces are inclined upwards from the tower support at an angle of 45 - 90°.

US2015/0329180 A1 discloses a floating body structure of the type described in the preamble of the independent claims. According to this document the floating body structure is sunk and floated in the water at a predetermined water depth to reduce the influence of the sea waves. Accordingly, this floating structure will under normal use not be arranged in the water surface partly under water level and partly over the water level. Accordingly, the floating structure will not be influenced by the waves in such way that a momentum originating from the sea waves can contribute to stabilizing the floating offshore structure.

It would be desirable to find simpler ways for stabilizing offshore platforms in windy conditions.

### Description of the invention

It is an objective of the invention to provide an improvement in the art. In particular, it is an objective to provide an improved configuration for floating offshore platforms for wind turbines, especially provide simple means for improving stability in windy conditions. This objective and further advantages are achieved with an offshore platform and its combination with a wind turbine as described below and in the claims.

The offshore platform carries the wind turbine in water in offshore conditions. The wind turbine comprises a tower and a rotor, typically mounted on a nacelle.

In short, the offshore platform comprises three buoyancy modules arranged in a triangular configuration in corners of an equilateral triangle, in the center of which the tower support for the tower of the wind turbine is located. The tower support is fixed in a frame comprising three radial braces, each of which is rigidly connecting the tower support with one of the three buoyancy modules. The radial braces are inclined upwards from the tower support, typically from the bottom part of the tower support, towards the buoyancy modules.

The term "buoyancy module" is used for an element that provides buoyancy and/or stability to the platform. For example, the buoyancy module is a buoyancy tank or comprises a plurality of buoyancy tanks fitted together. Optionally, a buoyancy module comprises or is a vertical or near-vertical cylinder, a group of two or more vertical or near-vertical cylinders, or other configuration of relevant vertical or near-vertical vessels that are located at the corners of the triangular configuration and can provide buoyancy and/or stability to the platform.

In more detail, the offshore platform comprises a tower support, for example tower support column, which carries the tower of the wind turbine. The platform comprises three buoyancy modules. For example, each buoyancy module comprises a group of buoyancy members, for example a group of two, three or more buoyancy members, such as buoyancy tanks. The buoyancy modules are lighter than water and provide buoyancy to the platform when in water. The three modules are arranged in a triangular configuration in corners of an equilateral triangle in which the tower support is located in the center. In more detail, the tower support comprises a centerline coinciding with a centerline of the tower when mounted on the platform and being located in the center of the triangle.

The platform comprises a frame of rigid tubular members, in particular braces, that are connecting the buoyancy modules with the tower support. A convenient and useful configuration is a tetrahedral configuration.

Accordingly, the tower support is fixed in a frame comprising three radial braces, each of the radial braces rigidly connecting the tower support with one of the three buoyancy modules. Advantageously, the three radial braces are connected to a bottom part of the tower support structure.

Each radial brace has a brace centerline, the brace centerline having an angle α (alpha) with the tower support centerline. In particular, this angle α is in the range of 80° to 87°. It needs to be mentioned that the radial braces are inclined upwards from the tower support towards the buoyancy modules in order to be submerged in water when in use.

The value of the angle α in the range of 80-87° is implying that an angle β=(90°-α) is in the range of 3-10°, which would be the angle between the radial brace with the water surface in steady calm water under non-windy conditions. In general, it can be said that the smaller α and the larger β, the more counter-momentum towards a vertical orientation of the tower is given. However, on the other hand, increased inclination of the radial braces, equivalent to a smaller angle α, also results in increased draft, which can be critical when mounting the wind turbine on the platform in a harbor, where often only a draft of 8 m can be accepted. The given angular range is a compromise between increased stability and practical draft.

For example, the platform with the buoyancy modules and the frame when in water is dimensioned for reaching downwards into water to a depth of no more than 8 m when carrying a wind turbine having a weight of 2,000,000 kg (2000 tons).

In order to achieve sufficient buoyancy, the system in water is dimensioned for floating at a level in the water where at least 80% or at least 90% of the radial braces are under water for contributing to the buoyancy.

The buoyancy modules have a height H. The radial braces are connected to the buoyancy modules at a connection point positioned at a level between 0.4 and 0.6, of H. When the connection point is at the water surface level, this implies that a substantial part of the buoyancy modules extends downwards into the water from the connection point with the radial braces. Water movement, typically from waves, exerting forces on this downward extending portion of the buoyancy modules creates a counter-momentum to the momentum from the wind turbine due to wind. This counter-momentum has a stabilizing effect on the overall offshore system in windy condition with waves.

In practical embodiments, the frame comprises three lateral braces, each of which interconnect neighboring radial braces for additional stabilization. In particular, the three lateral braces are arranged in a plane perpendicular to the tower support centerline, the latter coinciding with the centerline of the tower.

For example, the frame comprises three diagonal braces, each of which extends from the support column to a corresponding one of the three radial braces. These are not in a planar configuration. Advantageously, the three diagonal braces are connected to a top part of the tower support structure.

This arrangement of braces may in total form a tetrahedral shape.

### Brief description of the drawings

Embodiments of the invention will be described in the figures, whereon:
- Fig. 1: illustrates principles related to the invention;
- Fig. 2: illustrates a floating platform according to prior art;
- Fig. 3: illustrates a floating platform according to the invention;
- Fig. 4: illustrates an underwater part of the floating platform from A) perspective view and B) top view;
- Fig. 5: illustrates the underwater part of the platform with the centerline of the tower A) vertical and B) inclined;
- Fig. 6: illustrates the inclined underwater part in A) perspective view and B) top view.

### Detailed description

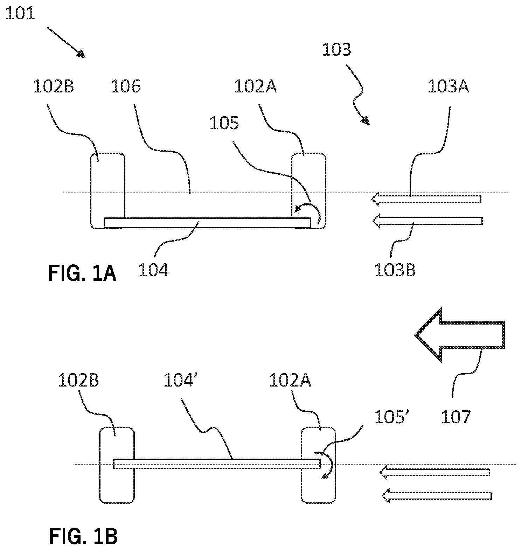

FIG. 1 illustrates a basic principle of the invention for ease of understanding. The illustrated floating offshore platform 101 comprises a plurality of buoyancy modules 102A, 102B floating in water halfway submerges under the surface 106 of the water. The buoyancy modules 102A, 102B are approached by a water stream, for example wave 103. It is assumed that the water speed in the upper part 103A of the wave 103 is equal to the water speed in the lower part 103B of the wave 103, although, this is only for simplicity of the explanation and not essential.

In FIG. 1A, the buoyancy modules 102A, 102B are connected at their bottoms by a rigid frame 104. The force on the first buoyancy module 102A by the lower part 103A of the wave 103 results only a linear push action of the frame 104, whereas the force by the upper part 103B of the wave 103 induced a counter-clockwise rotational momentum 105 on the first buoyancy module 102A, which is transferred to the frame other buoyancy member 102B due to the rigid frame 104. The movement of the platform 101 in this event is complex, in that the momentum 105 of the first buoyancy module 102A will press the other buoyancy module 102B down, which, in turn, creates more buoyancy, and the reaction will cause the first buoyancy module 102A being pressed upwards. The reaction depends on how much the buoyancy modules 102A, 102B are under water, as an increase of buoyancy of the second buoyancy module 102B is only given until the buoyancy module 120B is fully submerged in the water.

In FIG. 1B, the buoyancy modules 102A, 102B are connected at midpoints by a rigid frame 104'. In this case, the upper part 103A of the wave is performing a linear push action on the frame, while the lower part 103B of the wave 103 induces a rotational momentum in the opposite, clockwise direction. Accordingly, the first buoyancy module 102A will be pressed downwards, and the other buoyancy module 102B upwards.

When having regards to offshore platforms for wind turbines, the situation is more complex, as large wave forces typically go along with wind 107, which in the simple examples of FIG. 1 induces a counter-clockwise momentum on the platform. In this view, the structure in FIG. 1B with the clockwise momentum induced by the waves has a damping effect relatively to the clockwise momentum forces by the wind on the wind turbine.

The construction of a wind turbine platform has further aspects to take into regard. One of the aspects is that the rigid frame 104, 104' is desired to be provided to a large extent under the water surface, as it contributes with its buoyancy to the total buoyancy. On the other hand, a frame 104 that extends deeply under water is also not desired, as the assembly in the harbor gives limitations to the depth with which the platform 101 is allowed to extend.

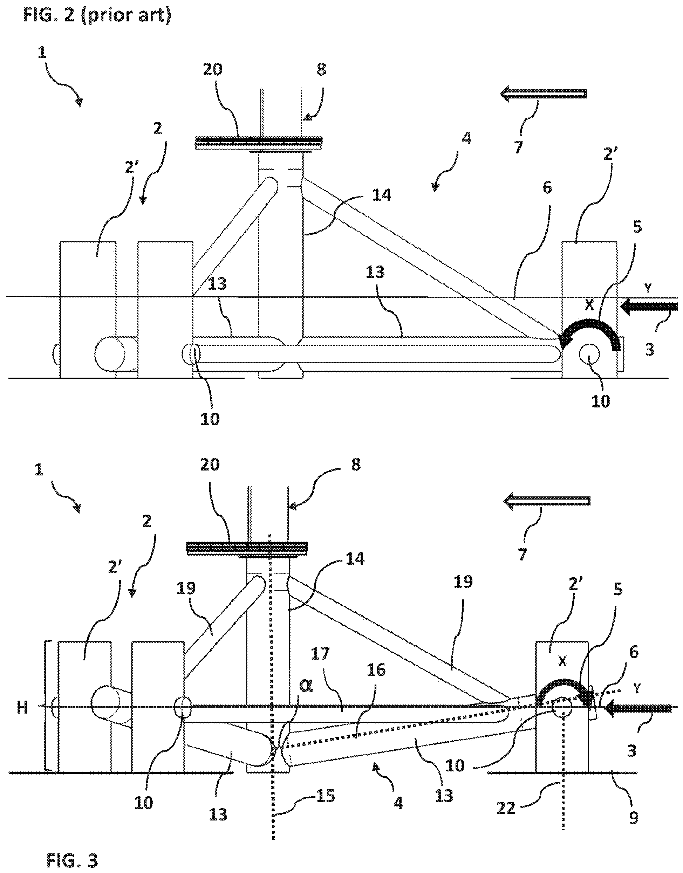

In order to take all these aspects into account, a platform has been developed, which is presented in FIG. 3 and compared to prior art platforms with reference to FIG. 2.

Fig. 2 illustrates a prior art floating platform 1, where buoyancy modules 2 typically groups of buoyancy members 2', such as buoyancy tanks, are interconnected at their lower end by connecting rods 10 to a rigid frame 4 with radial braces 13. Connecting rods 10 extend through the buoyancy members 2' in the buoyancy modules 2 and fasten the radial braces 13 to the buoyancy modules 2. The radial braces 13 are arranged in a plane and submerged in water when the platform 1 is in use in water, for example at an offshore location. An advantage is addition of buoyancy from the submerged braces 13. However, as discussed in connection with FIG. 1A, waves 3 acting on the buoyancy modules 2 will induce a rotational momentum 5 that is added to the momentum created by the tower 8 on the platform 1 when wind 7 is acting on the rotor and the tower 8 of the wind turbine.

The floating platform 1 comprises a tower support 14 in the form of a tower support column that is supporting the tower 8 of a wind turbine wind turbine. A working platform 20 is typically attached to the tower 8.

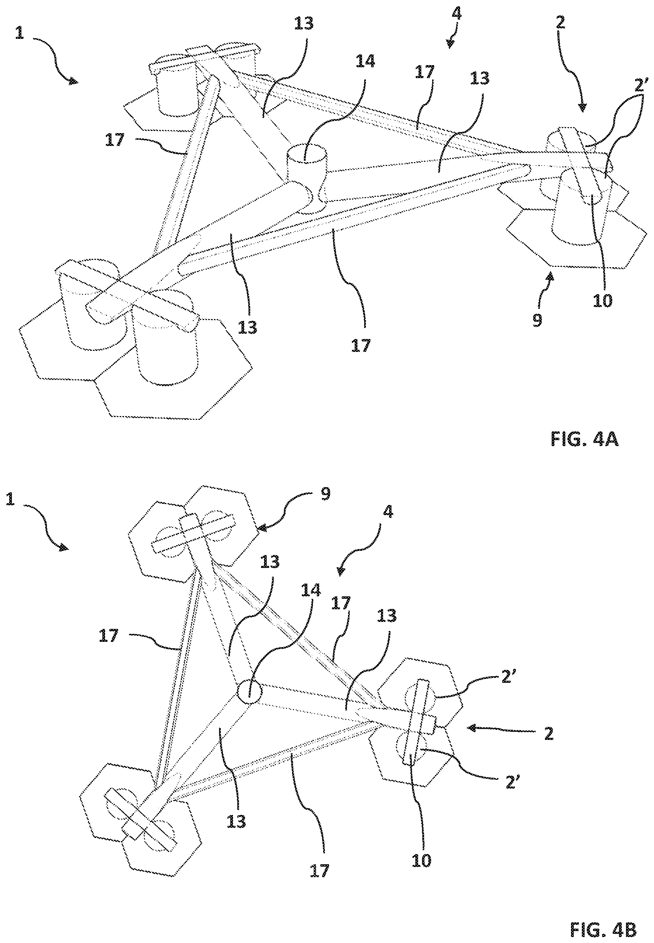

FIG. 3 illustrates a floating platform according to the invention in a side view. FIG. 4A shows that part of the platform, which is under the water surface 6, in a perspective view and FIG. 4B in a top view. The tower support 14 is in the center of the equilateral triangle, of which the buoyancy modules 2 are provided at the vertices of this triangle.

In comparison to the frame in FIG. 2, the frame 4 in FIG. 3 and 4 comprises a number of differences. An important difference is the locations of the connecting rods 10 relatively to the water surface 6. As the level of the connecting rods 10 under normal conditions is at the water surface 6, the rotational momentum 5 induced by waves 3 is clockwise and partially counteracts the rotational momentum on the wind turbine by the wind 7, as already discussed in relation to FIG. 1B. Accordingly, a damping effect is achieved in relation to the inclination of the wind turbine and the platform 1 as induced by wind and waves.

The radial braces 13 are not arranged in a planar configuration, in contrast to the prior art. Instead, the radial braces 13 are inclined with respect to the water line 6, namely by an angle β=(90°-α), where the angle α is measured between a brace centerline 16 of the radial brace 13 and the centerline 15 of the support column 14, which is also the centerline of the tower 8. Due to this inclination, the radial braces 13 are almost entirely submerged in water, although, the connection to the buoyancy modules, which is by the connecting rod 10 is at the surface of the water.

The value for the angle α is in the range of 80-87°, implying that the angle β=(90°-α) is in the range of 3-10°, which would be the angle between the radial brace with the water surface in calm water under non-windy conditions. In general, it can be said that the smaller α and the larger β, the more counter-momentum towards a vertical orientation of the tower is given. However, on the other hand, a smaller angle α also results in increased draft, which can be critical when mounting the wind turbine on the platform in a harbor, where often only a draft of 8 m can be accepted.

In the shown embodiment, the buoyancy member 2' of the buoyancy module 2 has a height H, and the connecting rod 10 is located at H/2, when measured from the heave plate 9. The dimensioning of the platform 1 is made such that the platform, when carrying the wind turbine, is submerged to a depth such that the connecting rod 10 is at the level of the water surface 6. This assures that the radial braces 13 are substantially under the water surface 6 in non-windy conditions and, thus, assist in the buoyancy of the entire platform 1. Advantageously, the radial braces 13 are connected to the bottom part of the tower support 14.

The frame 4 of the floating platform 1 is further stabilized by comprising three lateral braces 17, each of which interconnect neighboring radial braces 13. Additionally, the frame 4 comprises three diagonal braces 19, each of which extends between the top part of the support column 14 and a corresponding one of the three radial braces 13.

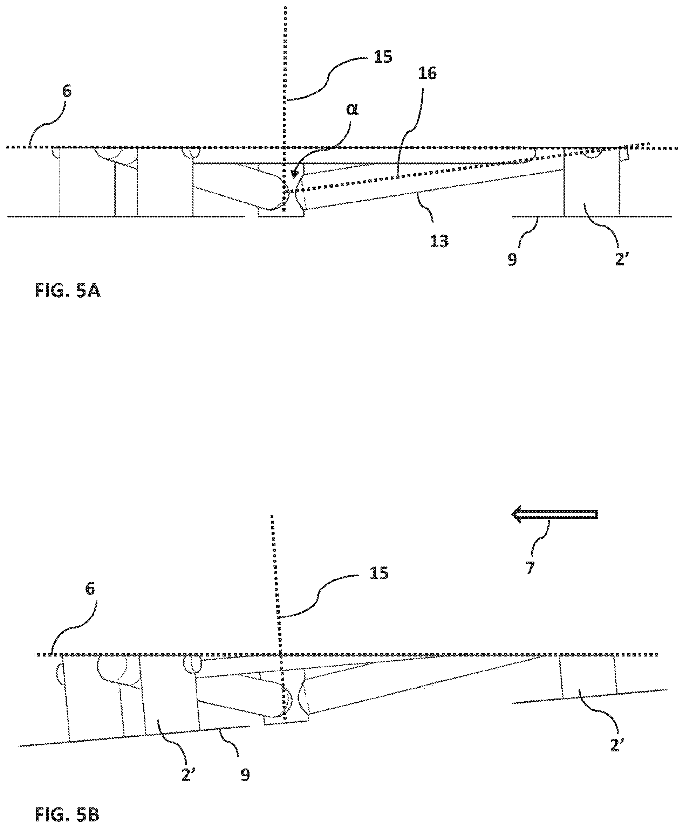

FIG. 5A shows that part of the floating platform 1, that is located under the water surface 6, including the buoyancy modules 2, the motion-damping heave plates 9 at the lower end of the buoyancy modules 2, as well as the radial braces 13 and the lateral braces 17. Whereas FIG. 5A illustrates the submerged part with the centerline 15 of the tower in vertical orientation, FIG. 5B shows the submerged part of the platform 1 when the centerline is inclined, for example because the wind turbine is pushed in a direction to the left by wind 7 coming from the right side. The rotational momentum induced by the wind presses the left buoyancy modules 2 deeper into the water, whereas the right buoyancy module 2 is lifted more out of the water. However, the wind 7 will also induce surface motion of the water with waves, which push onto the submerged buoyancy modules 2, which creates a counter-momentum, as explained in relation to FIG. 1B and FIG. 3. This counter-momentum has a damping effect and reduces the total momentum induced in the platform 1, which is a sum of the momentum from the tower 8 acting on the platform 1 and momentum from the waves 3 acting on the submerged part of the platform 1.

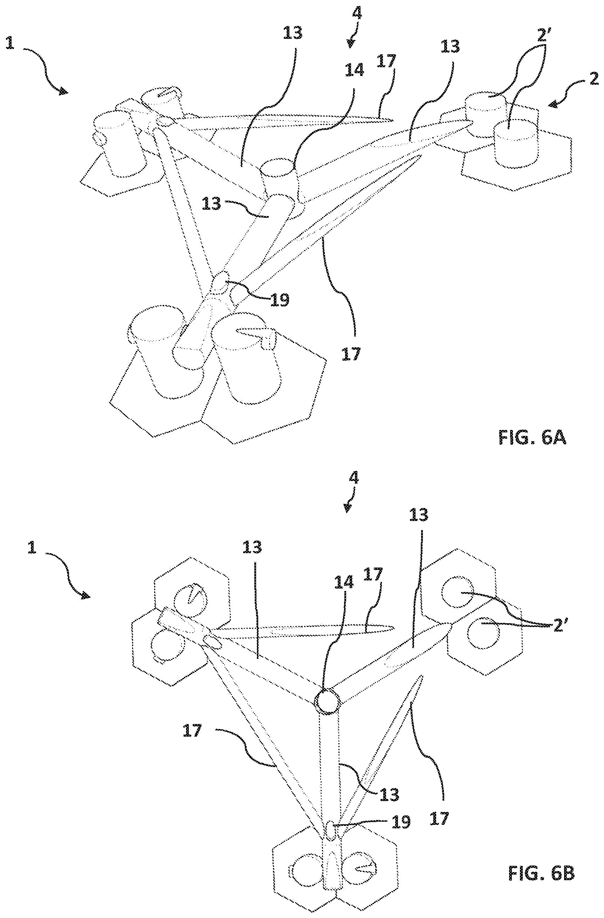

The situation in FIG. 5B is illustrated in a perspective view in FIG. 6A and in a top view in FIG. 6B.

## Claims

1. An offshore platform (1) for a wind turbine that comprises a tower (8) with a rotor; wherein the platform (1) comprises three buoyancy modules (2) providing buoyancy to the platform (1) when in water, the three buoyancy modules (2) being arranged in an triangular configuration in corners of an equilateral triangle, in the center of which a tower support (14) is located for carrying the tower (8); wherein the tower support (14) comprises a centerline (15) coinciding with a centerline of the tower (8) when mounted on the platform (1) and being located in the center of the triangle; wherein the tower support (14) is fixed in a frame (4) comprising three radial braces (13), each of the radial braces (13) rigidly connecting the tower support (14) with one of the three buoyancy modules (2); wherein each radial brace (13) has a brace centerline (16), the brace centerline (16) having an angle α with the tower support centerline (15); and the radial braces (13) being inclined upwards from the tower support (14) towards the buoyancy modules (2), wherein the buoyancy modules (2) have a height H, wherein the radial braces (13) are connected to the buoyancy modules (2) at a position between 0.4 and 0.6 of the height H, and wherein the system in water is dimensioned for floating at a level in the water where at least 80% of the radial braces (13) are under water for contributing to the buoyancy, **characterized in that** the angle α is in the range of 80° to 87°, **in that** each buoyancy module (2) comprises buoyancy members (2') such as buoyancy tanks, wherein for each buoyancy module (2) its buoyancy members (2') are interconnected to the rigid frame (4) by a connecting rod (10) extending through the buoyancy members (2') and fastening the corresponding radial brace (13) to the buoyancy module (2), and **in that** the level of the connecting rod (10) of each buoyancy module (2) under normal conditions is at the water surface (6).

2. Offshore platform according to claim 1, wherein the frame (4) comprises three lateral braces (17), each of which interconnect neighboring radial braces (13) for additional stabilization, the three lateral braces (17) being arranged in a plane perpendicular to the tower support centerline (15); wherein the frame (4) comprises three diagonal braces (19), each which extends from the support column (14) and a corresponding one of the three radial braces (13), wherein the three diagonal braces (19) are connected to a top part of the tower support structure (14) and the three radial braces (19) are connected to a bottom part of the tower support structure (14); wherein the tower support is a tower support column (14).

3. An offshore wind turbine system comprising a wind turbine in combination with a floating platform (1) according to any one of claims 1 or 2, wherein the tower support (14) carries the tower (8) of the wind turbine and the tower (8) carries the wind rotor.

4. System according to claim 3, wherein the frame (4) comprises three lateral braces (17), each of which interconnect neighboring radial braces (13) for additional stabilization, the three lateral braces (17) being arranged in a planar configuration perpendicular to the tower support centerline (15).

5. System according to claim 4, wherein the frame (4) comprises three diagonal braces (19), each of which extends from the support column (14) and to a corresponding one of the three radial braces (13).

6. System according to claim 5, wherein the three diagonal braces (19) are connected to a top part of the tower support structure (14) and the three radial braces (19) are connected to a bottom part of the tower support structure (14).

7. System according to any one of claims 3-6, wherein the platform (1) with the buoyancy modules (6) and the frame (4) when in water is dimensioned for reaching downwards into water to a depth of no more than 8 m for a wind turbine having a weight of 2,000,000 kg.

## Patentansprüche

1. Offshore-Plattform (1) für eine Windturbine, die einen Turm (8) mit einem Rotor umfasst; wobei die Plattform (1) drei Auftriebsmodule (2) umfasst, die der Plattform (1) Auftrieb bereitstellen, wenn sie im Wasser liegt, wobei die drei Auftriebsmodule (2) in einer dreieckigen Konfiguration in den Ecken eines gleichseitigen Dreiecks angeordnet sind, in dessen Mitte sich eine Turmstütze (14) zum Tragen des Turms (8) befindet; wobei die Turmstütze (14) eine Mittellinie (15) umfasst, die mit einer Mittellinie des Turms (8) zusammenfällt, wenn dieser auf der Plattform (1) montiert ist, und die sich in der Mitte des Dreiecks befindet; wobei die Turmstütze (14) in einem Rahmen (4) fixiert ist, der drei radiale Streben (13) umfasst, wobei jede der radialen Streben (13) die Turmstütze (14) starr mit einem der drei Auftriebsmodule (2) verbindet; wobei jede radiale Strebe (13) eine Strebenmittellinie (16) aufweist, wobei die Strebenmittellinie (16) einen Winkel α mit der Turmstützenmittellinie (15) aufweist; und die radialen Streben (13) von der Turmstütze (14) nach oben zu den Auftriebsmodulen (2) hin geneigt sind, wobei die Auftriebsmodule (2) eine Höhe H aufweisen, wobei die radialen Streben (13) mit den Auftriebsmodulen (2) an einer Position zwischen 0,4 und 0,6 der Höhe H verbunden sind, und wobei das System im Wasser so dimensioniert ist, dass es auf einem Niveau im Wasser schwimmt, bei dem mindestens 80 % der radialen Streben (13) unter Wasser sind, um zum Auftrieb beizutragen, **dadurch gekennzeichnet, dass** der Winkel α im Bereich von 80° bis 87° liegt, dass jedes Auftriebsmodul (2) Auftriebselemente (2') wie Auftriebstanks umfasst, wobei bei jedem Auftriebsmodul (2) dessen Auftriebselemente (2') mit dem starren Rahmen (4) durch eine Verbindungsstange (10) miteinander verbunden sind, die sich durch die Auftriebselemente (2') erstreckt und die entsprechende radiale Strebe (13) am Auftriebsmodul (2) befestigt, und dass das Niveau der Verbindungsstange (10) jedes Auftriebsmoduls (2) unter normalen Bedingungen an der Wasseroberfläche (6) liegt.

2. Offshore-Plattform nach Anspruch 1, wobei der Rahmen (4) drei seitliche Streben (17) umfasst, von denen jede benachbarte radiale Streben (13) zur zusätzlichen Stabilisierung miteinander verbindet, wobei die drei seitlichen Streben (17) in einer Ebene senkrecht zur Turmstützenmittellinie (15) angeordnet sind; wobei der Rahmen (4) drei diagonale Streben (19) umfasst, von denen sich jede von der Stützsäule (14) und einer entsprechenden der drei radialen Streben (13) erstreckt, wobei die drei diagonalen Streben (19) mit einem oberen Teil der Turmstützstruktur (14) verbunden sind und die drei radialen Streben (19) mit einem unteren Teil der Turmstützstruktur (14) verbunden sind; wobei die Turmstütze eine Turmstützsäule (14) ist.

3. Offshore-Windturbinensystem, umfassend eine Windturbine in Kombination mit einer schwimmenden Plattform (1) nach einem der Ansprüche 1 oder 2, wobei die Turmstütze (14) den Turm (8) der Windturbine trägt und der Turm (8) den Windrotor trägt.

4. System nach Anspruch 3, wobei der Rahmen (4) drei seitliche Streben (17) umfasst, von denen jede benachbarte radiale Streben (13) zur zusätzlichen Stabilisierung miteinander verbindet, wobei die drei seitlichen Streben (17) in einer ebenen Konfiguration senkrecht zur Turmstützenmittellinie (15) angeordnet sind.

5. System nach Anspruch 4, wobei der Rahmen (4) drei diagonale Streben (19) umfasst, von denen sich jede von der Stützsäule (14) zu einer entsprechenden der drei radialen Streben (13) erstreckt.

6. System nach Anspruch 5, wobei die drei diagonalen Streben (19) mit einem oberen Teil der Turmstützstruktur (14) verbunden sind und die drei radialen Streben (19) mit einem unteren Teil der Turmstützstruktur (14) verbunden sind.

7. System nach einem der Ansprüche 3 bis 6, wobei die Plattform (1) mit den Auftriebsmodulen (6) und dem Rahmen (4), wenn sie im Wasser liegt, so dimensioniert ist, dass sie bei einer Windturbine, die ein Gewicht von 2.000.000 kg aufweist, bis zu einer Tiefe von höchstens 8 m in das Wasser hineinreicht.

## Revendications

1. Plateforme en mer (1) pour éolienne qui comprend une tour (8) avec un rotor ; dans laquelle la plateforme (1) comprend trois modules de flottaison (2) assurant la flottaison de la plateforme (1) lorsqu'elle est immergée dans l'eau, les trois modules de flottaison (2) étant agencés dans une configuration triangulaire aux sommets d'un triangle équilatéral, au centre duquel se trouve un support de tour (14) destiné à supporter la tour (8) ; dans laquelle le support de tour (14) comprend une ligne centrale (15) coïncidant avec une ligne centrale de la tour (8) lorsqu'elle est montée sur la plateforme (1) et étant située au centre du triangle ; dans laquelle le support de tour (14) est fixé dans un cadre (4) comprenant trois entretoises radiales (13), chacune des entretoises radiales (13) reliant rigidement le support de tour (14) à l'un des trois modules de flottaison (2) ; dans laquelle chaque entretoise radiale (13) présente une ligne centrale d'entretoise (16), la ligne centrale d'entretoise (16) formant un angle α avec la ligne centrale de support de tour (15) ; et les entretoises radiales (13) étant inclinées vers le haut depuis le support de tour (14) en direction des modules de flottaison (2), dans laquelle les modules de flottaison (2) présentent une hauteur H, dans laquelle les entretoises radiales (13) sont reliées aux modules de flottaison (2) au niveau d'une position comprise entre 0,4 et 0,6 de la hauteur H, et dans laquelle le système immergé dans l'eau est dimensionné pour flotter à un niveau dans l'eau où au moins 80 % des entretoises radiales (13) se trouvent sous l'eau pour contribuer à la flottaison, **caractérisée en ce que** l'angle α est situé dans la plage allant de 80° à 87°, **en ce que** chaque module de flottaison (2) comprend des éléments de flottaison (2') tels que des réservoirs de flottaison, dans laquelle, pour chaque module de flottaison (2), ses éléments de flottaison (2') sont reliés entre eux au cadre rigide (4) par une bielle (10) s'étendant à travers les éléments de flottaison (2') et fixant l'entretoise radiale correspondante (13) au module de flottaison (2), et **en ce que** le niveau de la bielle (10) de chaque module de flottaison (2) dans des conditions normales est à la surface de l'eau (6).

2. Plateforme en mer selon la revendication 1, dans laquelle le cadre (4) comprend trois entretoises latérales (17), chacune de celles-ci reliant entre elles des entretoises radiales voisines (13) pour une stabilisation supplémentaire, les trois entretoises latérales (17) étant agencées dans un plan perpendiculaire à la ligne centrale de support de tour (15) ; dans laquelle le cadre (4) comprend trois entretoises diagonales (19), chacune de celles-ci s'étendant à partir de la colonne de support (14) et d'une entretoise radiale correspondante parmi les trois entretoises radiales (13), dans laquelle les trois entretoises diagonales (19) sont reliées à une partie supérieure de la structure de support de tour (14) et les trois entretoises radiales (19) sont reliées à une partie inférieure de la structure de support de tour (14) ; dans laquelle le support de tour est une colonne de support de tour (14).

3. Système d'éolienne en mer comprenant une éolienne en combinaison avec une plateforme flottante (1) selon l'une quelconque des revendications 1 ou 2, dans lequel le support de tour (14) supporte la tour (8) de l'éolienne et la tour (8) supporte le rotor d'éolienne.

4. Système selon la revendication 3, dans lequel le cadre (4) comprend trois entretoises latérales (17), chacune de celles-ci reliant entre elles des entretoises radiales voisines (13) pour une stabilisation supplémentaire, les trois entretoises latérales (17) étant agencées dans une configuration plane perpendiculaire à la ligne centrale de support de tour (15).

5. Système selon la revendication 4, dans lequel le cadre (4) comprend trois entretoises diagonales (19), chacune de celles-ci s'étendant à partir de la colonne de support (14) et jusqu'à une entretoise correspondante parmi les trois entretoises radiales (13).

6. Système selon la revendication 5, dans lequel les trois entretoises diagonales (19) sont reliées à une partie supérieure de la structure de support de tour (14) et les trois entretoises radiales (19) sont reliées à une partie inférieure de la structure de support de tour (14).

7. Système selon l'une quelconque des revendications 3 à 6, dans lequel la plateforme (1) avec les modules de flottaison (6) et le cadre (4) lorsqu'elle est immergée dans l'eau est dimensionnée pour atteindre une profondeur d'eau n'excédant pas 8 m pour une éolienne ayant un poids de 2 000 000 kg.
